# EUROPEAN PATENT SPECIFICATION

(11) **EP 3 006 145 B1**
(45) Date of publication and mention of the grant of the patent: **28.02.2018**
(21) Application number: 14804111.4
(22) Date of filing: 28.05.2014
(51) Int. Cl.: B23B 45/02, B23B 45/00, B23B 45/14, B25H 1/00

(54) **DRILLING MACHINE**
BOHRMASCHINE
MACHINE DE PERÇAGE

(30) Priority: 29.05.2013 JP 2013113112
(43) Date of publication of application: 13.04.2016
(73) Proprietor: Nitto Kohki Co., Ltd., Tokyo 146-8555 (JP)
(72) Inventor: YOKOYAMA, Toshiki, Tokyo 146-8555 (JP)
(74) Representative: Wimmer, Hubert
(86) International application number: PCT/JP2014/064059
(87) International publication number: WO 2014/192783

(56) References cited:
- EP-A1- 2 979 791
- EP-A1- 2 995 403
- JP-A- H0 230 410
- JP-A- H1 128 605
- JP-A- H09 239 677
- JP-A- 2005 074 559
- JP-A- 2011 136 407
- US-A1- 2009 028 653

## Description

### Technical Field:

The present invention relates to a drilling machine driven by a battery.

### Background Art:

A portable drilling machine has a body frame, a drilling drive unit having a motor for rotationally driving a drilling tool, e.g. a drill or an annular cutter, the drilling drive unit being attached to the body frame vertically movably, and a securing unit provided underneath the body frame to removably and securely hold the drilling machine to a workpiece, as disclosed, for example, in JP H7-35698 U1. The body frame has an interior space in which is disposed a drive control unit for controlling the motor of the drilling drive unit and so forth, together with electric wiring, etc. Such a portable drilling machine is often used where there is dust or machining swarf in the air, and may be used in the rain outdoors under certain circumstances. Therefore, the drive control unit and other electric components are disposed in the interior space of the body frame in such a manner that these electric components are shut out from the outside.

Recently, the use has been made of a battery to drive a drilling tool in order to improve the portability of drilling machines of the type described above, as disclosed, for example, in US 2009 028 653 A. A battery-operated drilling machine needs to replace the battery with a charged one after the drilling machine has been used for a certain length of time because of a drop in battery voltage. Particularly, when the battery-operated drilling machine is continuously used for a long time, frequent battery replacement is demanded. Accordingly, it is desirable that the battery loading and unloading operation can be carried out with relative ease. On the other hand, if the drilling machine is configured so that the battery loading operation can be performed easily, the connector terminals of the battery, which are exposed to the outside, cannot be sufficiently protected from dust and rain, so that there may be short circuit of the battery due to dust or rain. Attention is also drawn to EP 2 979 791 A1 and EP 2 995 403 A1 of the same applicant as the present invention, which have been published after the filing date of the present invention and are comprised in the state of the art according to Article 54(3) EPC and which each show a drilling machine having a drilling drive unit with a motor for rotationally driving a drilling tool, a drilling machine body unit with a battery loading part into which a battery for supplying electric power to the motor is loaded, the drilling machine body unit supporting the drilling drive unit movably to bring the drilling tool toward and away from a workpiece, and a battery cover attached to the drilling machine body unit. The battery cover is attached so as to be slideable between a retracted position and an advanced position relative to the battery loaded in the battery loading part, and the battery cover is configured to cover at least a part of a gap between the drilling machine body unit and the battery when the battery cover is in the advanced position.

### Summary of Invention:

Accordingly, an object of the present invention is to provide a drilling machine using a battery and configured to protect the connector terminals of the battery from dust, rain, and the like.

The present invention provides a drilling machine as set forth in claim 1. In Further embodiments are inter alia disclosed in the dependent claims. The drilling machine inter alia includes: a drilling drive unit having a motor for rotationally driving a drilling tool; a drilling machine body unit having a battery loading part into which a battery for supplying electric power to the motor is loaded, the drilling machine body unit supporting the drilling drive unit vertically movably to bring the drilling tool toward and away from a workpiece; and a battery cover attached to the drilling machine body unit, the battery cover being movable between a retracted position and an advanced position relative to the battery loaded in the battery loading part, the battery cover being configured to cover at least a part of a gap between the drilling machine body unit and the battery when the battery cover is in the advanced position.

In the drilling machine, the battery cover covers the gap between the drilling machine body unit and the battery. Therefore, it is possible to reduce the danger of short circuit occurring between the terminals of the battery which might otherwise be caused by dust or water entering through the gap. It should be noted that the terms "vertical", "upward", and "downward" as stated in the specification and the claims of this application are used to facilitate the understanding of the relative positional relationship between constituent elements of the drilling machine according to the present invention, and that the terms should not be construed as meaning vertical directions in absolute space. In addition, the term "movable between a retracted position and an advanced position relative to the battery" as used herein means that the battery cover is movable between positions away from and close to the battery, and that the movement of the battery cover is not limited to the movement in the longitudinal direction of the drilling machine. In addition, the travel path between the retracted position and the advanced position is not limited to a rectilinear one but may be of any form.

Preferably, the battery cover may be configured such that, when the battery cover is in the advanced position, at least a part of the battery cover is located in a travel path of the battery along which the battery moves when the battery loaded in the battery loading part is unloaded therefrom, so that, when the battery cover is in the advanced position, the battery cannot be unloaded from the battery loading part.

Because the battery cannot be unloaded when the battery cover is in the advanced position, it is possible to prevent the battery from becoming dislodged accidentally.

Specifically, the drilling machine body unit may be structured such that the battery can be unloaded from the battery loading part by moving the battery upward from the battery loading part. The battery cover may be configured to cover the gap between the drilling machine body unit and the battery from above when the battery cover is in the advanced position.

More specifically, the battery loading part may have a battery guide extending in a vertical direction to guide the battery in the vertical direction, so that the battery is loaded into the battery loading part by moving the battery downward along the battery guide and unloaded from the battery loading part by moving the battery upward along the battery guide.

If the drilling machine body unit is structured such that the battery is unloaded from the battery loading part by moving the battery upward, the gap between the drilling machine body unit and the battery extends in the vertical direction; therefore, dust or water is particularly likely to enter the gap. Even in such a situation, entry of dust or the like into the gap can be prevented effectively because the battery cover covers the gap from above.

The battery cover is attached to the drilling machine body unit so as to be slidable between the retracted position and the advanced position.

The battery cover has a locking portion, and the drilling machine body unit has a first engaging portion which, when the battery cover is in the retracted position, engages the locking portion to restrain the movement of the battery cover in a sliding direction. The drilling machine body unit further has a second engaging portion which, when the battery cover is in the advanced position, engages the locking portion to restrain the movement of the battery cover in the sliding direction.

More preferably, the battery cover may have an elastically deformable arm portion extending in the sliding direction, and the locking portion may be provided at the distal end of the arm portion.

The battery cover can be locked in the retracted position and the advanced position by engagement of the locking portion of the battery cover with the first and second engaging portions, respectively, of the drilling machine body unit. Therefore, the battery cover can be prevented from moving accidentally.

Preferably, the drilling machine may further include a battery cover position detecting device disposed in the drilling machine body unit to detect that the battery cover has moved between the retracted position and the advanced position.

More preferably, the arrangement may be as follows. The battery cover position detecting device has a limit switch. The battery cover is configured to turn on/off the limit switch when the battery cover moves between the retracted position and the advanced position.

The limit switch makes it possible to detect that the battery cover has moved between the advanced position and the retracted position. Therefore, when the battery cover is not in the advanced position, it is possible to judge that the battery is not loaded in a normal position, or that the battery is being unloaded, and it is possible, on such an occasion, to take safety measures, e.g. warning the operator, or disabling driving of the motor.

Preferably, the drilling machine may further include a spring disposed between the drilling machine body unit and the battery cover, the spring urging the battery cover toward the advanced position from the retracted position.

The battery cover is held in the advanced position by the urging force of the spring. Therefore, the battery cover can be prevented from accidentally moving toward the retracted position.

Embodiments of the drilling machine according to the present invention will be explained below on the basis of the accompanying drawings.

### Brief Description of Drawings:

Fig. 1 is a perspective view of a drilling machine according to an embodiment of the present invention as seen from the left front side of the drilling machine.
Fig. 2 is a perspective view of the drilling machine shown in Fig. 1, as seen from the right front side of the drilling machine.
Fig. 3 is a partially sectioned view of the drilling machine shown in Fig. 1.
Fig. 4 is an exploded view of a drilling machine body unit.
Fig. 5 is a rear perspective view of the drilling machine shown in Fig. 1, with a battery unloaded therefrom.
Fig. 6 is a perspective view showing the front side of a battery.
Fig. 7 is a top perspective view of the drilling machine shown in Fig. 1 when a battery cover is in a retracted position.
Fig. 8 is a top perspective view of the drilling machine shown in Fig. 1 when the battery cover is in an advanced position.
Fig. 9A is a top view of the battery cover of the drilling machine shown in Fig. 1.
Fig. 9B is a side view of the battery cover shown in Fig. 9A.
Fig. 10 is a partially sectioned top view of the drilling machine when the battery cover is in the retracted position.
Fig. 11 is a partially sectioned top view of the drilling machine when the battery cover is in the advanced position.
Fig. 12 is a bottom view of a battery cover according to another embodiment.
Fig. 13 is a rear perspective view of a battery cover according to still another embodiment.
Fig. 14 is a partially sectioned top view of a drilling machine having the battery cover shown in Fig. 13.
Fig. 15 is a perspective view of the drilling machine shown in Fig. 1, with a drilling drive unit separated from the drilling machine body unit.
Fig. 16 is a perspective view of the drilling drive unit shown in Fig. 15, as seen from a different angle from that of Fig. 15.
Fig. 17 is a perspective view showing a left-side part of a battery housing.

### Description of Embodiments:

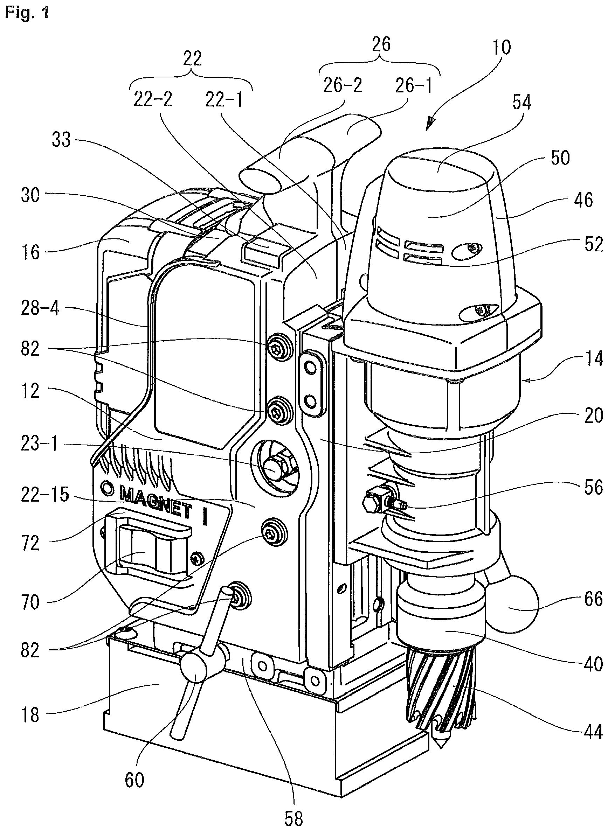

As shown in Figs. 1 to 5, a drilling machine 10 according to an embodiment of the present invention is a battery-operated portable drilling machine 10 including a drilling drive unit 14 having a motor 48 for rotationally driving a drilling tool (annular cutter in the illustrated example) 44 and a drilling machine body unit 12 having a battery loading part 28 into which is loaded a battery 16 for supplying electric power to the motor 48, the drilling machine body unit 12 supporting the drilling drive unit 14 vertically movably to bring the drilling tool 44 toward and away from a workpiece. The drilling machine 10 is secured to a predetermined drilling operation position of a workpiece by an electromagnet-type securing unit 18 attached to the bottom of the drilling machine body unit 12. In this state, the drilling tool 44 attached to the lower end of the drilling drive unit 14 is driven to rotate by the motor 48, and a feed handle 66 attached to the drilling machine body unit 12 is turned, thereby moving the drilling drive unit 14 downward relative to the drilling machine body unit 12 through a gear device comprising a rack 64 and a pinion 65, and thus drilling the workpiece with the drilling tool 44.

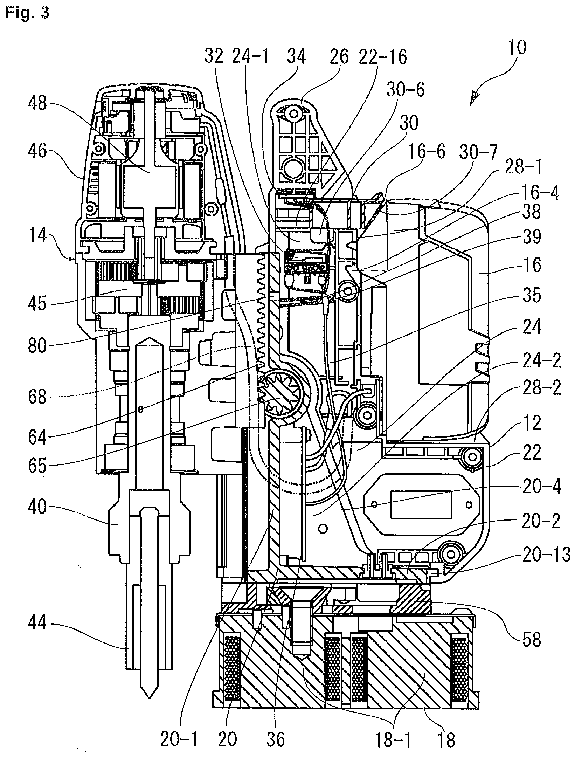

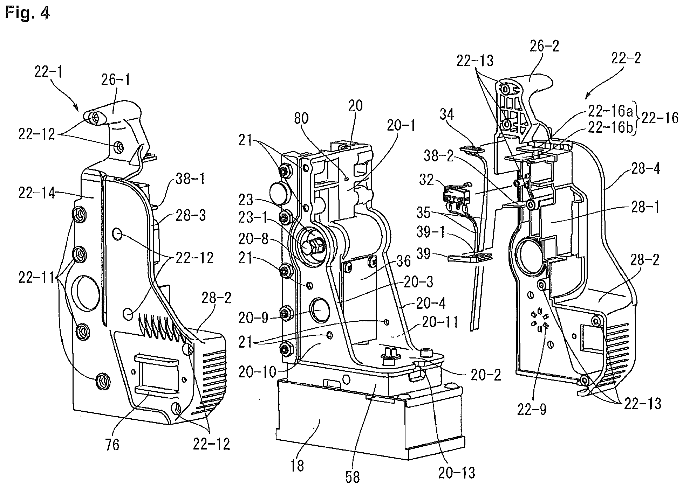

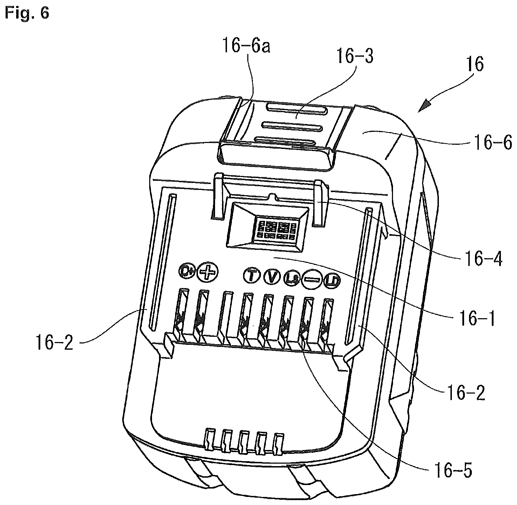

The drilling machine body unit 12 has, as shown in Figs. 3 and 4, a frame 20 supporting the drilling drive unit 14 movably in a vertical direction, and a battery housing 22 attached to the frame 20. More specifically, the frame 20 is formed in an L-shape by a front wall portion 20-1 to which the drilling drive unit 14 is attached, and a lower wall portion 20-2 to which an electromagnet-type securing unit 18 is attached. The battery housing 22, which is attached to the L-shaped frame 20, is configured to removably hold a battery 16 in an upper rear part thereof. The frame 20 needs to have sufficient strength to support the drilling drive unit 14, which is subjected to a relatively large load during a drilling operation, and to also support the electromagnet-type securing unit 18. In this embodiment, the frame 20 is made of aluminum to ensure the necessary and sufficient strength. On the other hand, the battery housing 22 is mainly for supporting the battery 16 and therefore made of a resin material to achieve a reduction in the overall weight of the drilling machine. Further, because the battery housing 22 is made of a resin material, no short circuit occurs even if any of female connector terminals 16-5 (Fig. 6) of the battery 16 contacts the battery housing 22. It should be noted that the term "L-shaped frame" as used herein means that the structure of the frame 20 contains an L-shaped portion. That is, the term "L-shaped frame" means to include any frame structure containing an L-shaped portion even if the overall configuration is not an L-shape, e.g. a frame structure in which a part of the lower wall portion 20-2 extends forward beyond the front wall portion 20-1.

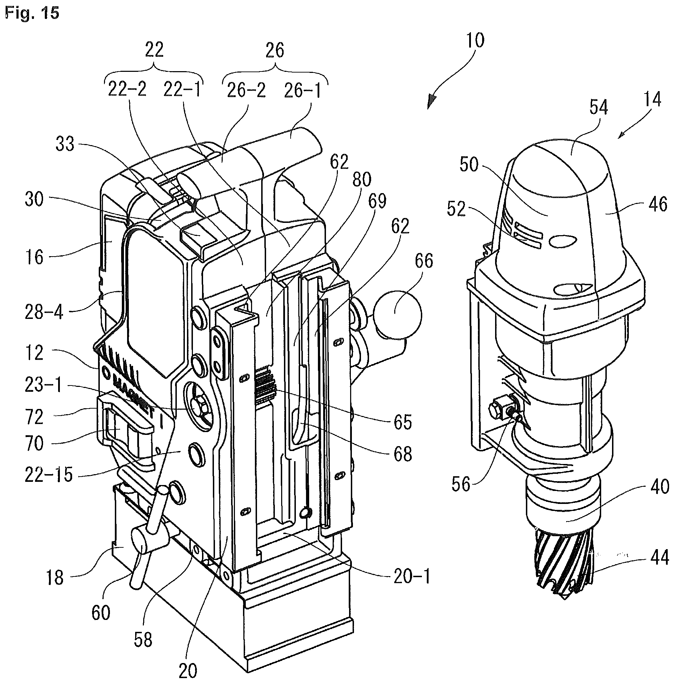

As shown in Fig. 4, the frame 20 has a right-side rib 20-3 provided between the respective right-side edges of the front wall portion 20-1 and the lower wall portion 20-2 and a left-side rib 20-4 provided between the respective left-side edges of the front wall portion 20-1 and the lower wall portion 20-2. It should be noted that the terms "right" and "left" as used in this specification mean directions relative to the drilling machine 10 as seen from the front side thereof. The right- and left-side ribs 20-3 and 20-4 enhance the strength of the frame 20, which supports the drilling drive unit 14. Between the upper end portions of the right- and left-side ribs 20-3 and 20-4 is formed a handle mounting hole 20-8 extending between a right side 20-10 and a left side 20-11. The handle mounting hole 20-8 is provided therein with a shaft 23-1 to which is attached a feed handle 66 to be turned by the operator to vertically move the drilling drive unit 14. The handle mounting hole 20-8 is further provided therein with a circular cylindrical gear mechanism part 23 containing a pinion 65 (Figs. 3 and 15) for converting the rotation of the shaft caused by the feed handle 66 into vertical motion of the drilling drive unit 14.

The battery housing 22 comprises a right-side part 22-1 and a left-side part 22-2, which are defined by splitting the battery housing 22 at the center thereof. The right-side part 22-1 and the left-side part 22-2 are attached to the frame 20 in such a manner as to sandwich the frame 20 therebetween from the right and left sides. When the battery housing 22 is attached to the frame 20, an interior space 24 (Fig. 3) is formed between the battery housing 22 and the frame 20. In the interior space 24, a drive control circuit 36 is attached to the rear surface of the front wall portion 20-1 in parallel thereto at a position between the right- and left-side ribs 20-3 and 20-4 (Fig. 4). The drive control circuit 36 controls electric power supplied from the battery 16 to the motor 48 of the drilling drive unit 14 and to an electromagnet 18-1 in the electromagnet-type securing unit 18.

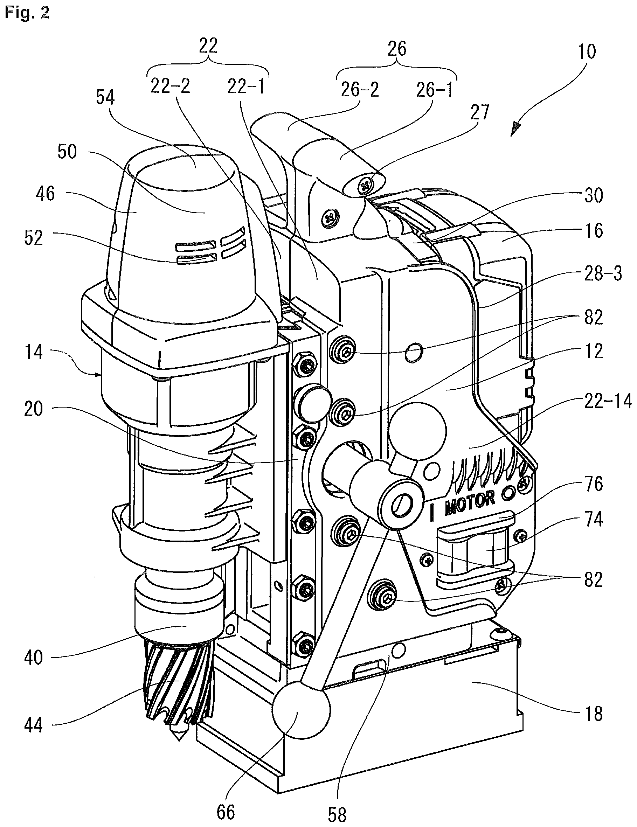

The battery housing 22 is formed with engagement projecting portions 22-9 to be engaged with circular engagement recesses 20-9, respectively, formed on the right-and left-side ribs 20-3 and 20-4 of the frame 20. Each engagement projecting portion 22-9 comprises 6 projections arranged in a circle. With this structure, the engagement between the battery housing 22 and the frame 20 is strengthened. The battery housing 22 is secured to the frame 20 with screws 82 (Fig. 1) inserted through screw insertion holes 22-11, respectively, provided in each of right side 22-14 (Fig. 2) and left side 22-15 (Fig. 1) of the battery housing 22, and engaged with 4 threaded holes 21, respectively, provided in each of the right and left sides 20-10 and 20-11 of the frame 20. Further, elongated screws (not shown) are inserted through 6 screw insertion holes 22-12 (Fig. 4), respectively, provided in the right-side part 22-1, and engaged with 6 threaded holes 22-13 (Fig. 4), respectively, provided in the left-side part 22-2, thereby connecting and securing the right-side part 22-1 and the left-side part 22-2 directly to each other. Thus, the battery housing 22 is secured to the frame 20 at a large number of points; therefore, stress concentration is less likely to occur even when a large force is applied to the battery housing 22, and the danger of the battery housing 22 being broken is reduced.

The top of the battery housing 22 is provided with a grip 26. The grip 26 comprises, as shown in Fig. 4, a right-side grip portion 26-1 formed on the right-side part 22-1 of the battery housing 22 and a left-side grip portion 26-2 formed on the left-side part 22-2 of the battery housing 22. The right-side grip portion 26-1 and the left-side grip portion 26-2 form a grip 26 (Fig. 1) when the right-side part 22-1 and the left-side part 22-2 are attached to the frame 20. The right-side grip portion 26-1 and the left-side grip portion 26-2 are connected and secured to each other by an elongated screw 27 (Fig. 2) extending from the right-side grip portion 26-1 to the left-side grip portion 26-2. The screw 27 functions also as a reinforcing member to increase the strength of the grip 26.

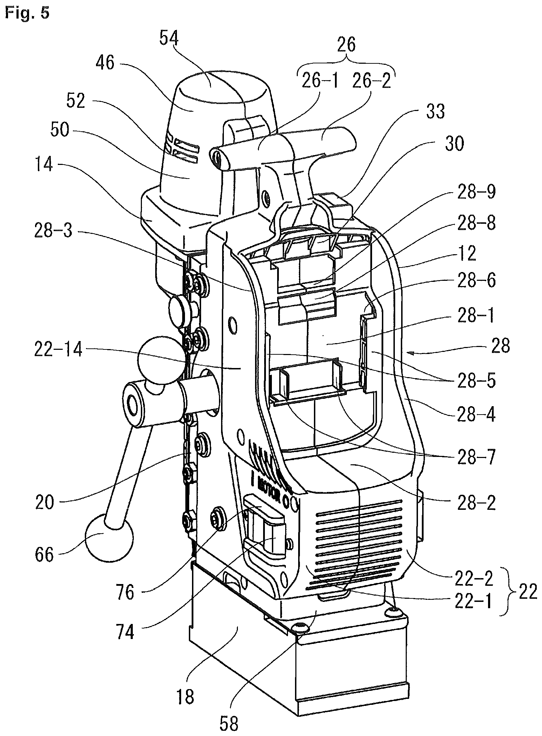

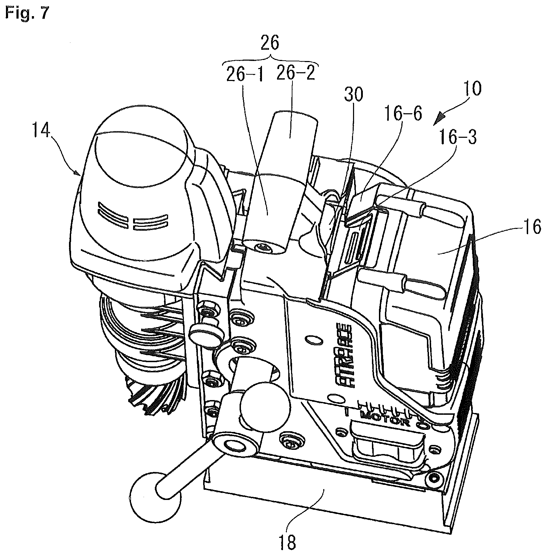

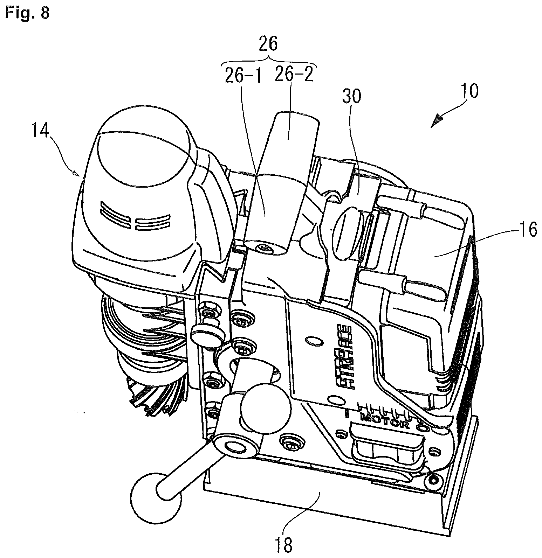

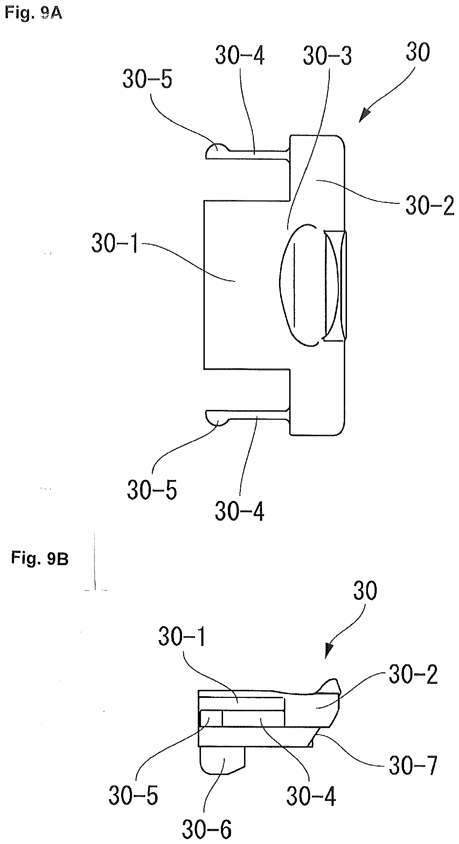

As shown in Fig. 5, a battery accommodating space (battery loading part) 28 for receiving and loading a battery 16 is provided at the rear upper part of the battery housing 22 of the drilling machine body unit 12. That is, the battery housing 22 is formed with a right-side wall portion 28-3, a left-side wall portion 28-4, an intermediate wall portion 28-1 extending between the right- and left-side wall portions 28-3 and 28-4 apart from and parallel to the front wall portion 20-1 of the frame 20 at the rear of the front wall portion 20-1, and a bottom wall portion 28-2 extending rearward from the lower end edge of the intermediate wall portion 28-1 between the right- and left-side wall portions 28-3 and 28-4. The battery accommodating space 28 is defined by the right- and left-side wall portions 28-3 and 28-4, the intermediate wall portion 28-1 and the bottom wall portion 28-2 in such a way that the battery accommodating space 28 is open at the upper and rear sides thereof. The battery accommodating space 28 is provided with battery guides 28-5 extending vertically at right- and left-side positions, respectively, slightly rearward of the intermediate wall portion 28-1. Guide grooves 28-6 are formed between the battery guides 28-5 and the intermediate wall portion 28-1. The guide grooves 28-6 are slidingly engaged with guide rails 16-2 (Fig. 6), respectively, of the battery 16, which are provided to extend vertically on a front side 16-1 of the battery 16, thereby allowing the battery 16 to be guided vertically. The intermediate wall portion 28-1 further has male connector terminals 28-7 disposed at a lower position thereof, and a battery locking recess 28-8 disposed at an upper position thereof. On the other hand, the front side 16-1 of the battery 16 is, as shown in Fig. 6, provided with female connector terminals 16-5 and a battery locking portion 16-4 that is longitudinally displaceable and urged forward by a spring member (not shown). When the battery 16 is loaded into the battery accommodating space 28 along the battery guides 28-5, the female connector terminals 16-5 engage the male connector terminals 28-7 to make the battery 16 and the drive control circuit 36 electrically connected to each other. At the same time, the battery locking portion 16-4 is fitted into the battery locking recess 28-8 to hold the battery 16 from moving vertically from the loaded position. The battery locking portion 16-4 has a sloped lower surface. When the battery 16 is slid downward along the battery guides 28-5, the sloped lower surface of the battery locking portion 16-4 is pushed by an upper wall portion 28-9 of the battery locking recess 28-8, causing the battery locking portion 16-4 to retract. After the sloped lower surface of the battery locking portion 16-4 has passed over the upper wall portion 28-9 to the lower side of the latter, the battery locking portion 16-4 is pushed out forward by the spring urging force and thus fitted into the battery locking recess 28-8. Further, in this embodiment, the battery locking portion 16-4 extends upward in the battery 16 to an inclined surface 16-3 exposed through an opening 16-6a in the widthwise center of an inclined cover engagement surface 16-6 (described later) formed on the top front side of the battery 16, the inclined surface 16-3 being substantially flush with the cover engagement surface 16-6. When the battery 16 is to be unloaded from the battery accommodating space 28, the inclined surface 16-3 is pushed to displace the battery locking portion 16-4 rearward. The battery housing 22 has a battery cover accommodating part 22-16 (Figs. 3 and 4) formed at the top of the intermediate wall portion 28-1 to extend longitudinally and to open rearward. The battery cover accommodating part 22-16 comprises a top portion 22-16a and a bottom portion 22-16b. The battery cover accommodating part 22-16 accommodates a battery cover 30. The battery cover 30 has a configuration as shown in Fig. 9A (detailed later). The battery cover 30 is slidable longitudinally in the battery cover accommodating part 22-16 between a retracted position (Figs. 5 and 7) where the battery cover 30 is retracted relative to the battery 16 and an advanced position (Fig. 8) where the battery cover 30 is advanced relative to the battery 16.

When the battery 16 is to be loaded into the battery accommodating space 28 in the drilling machine body unit 12, first, the battery cover 30 is pushed forward into the drilling machine body unit 12 so as to move to the retracted position shown in Fig. 5, thereby opening the upper side of the battery accommodating space 28. Thereafter, the battery 16 is inserted downward into the battery accommodating space 28 from the open upper side of the battery accommodating space 28. The battery 16 is moved downward while being guided by the battery guides 28-5 and thus accommodated in the battery accommodating space 28 (Fig. 7). At this time, the male connector terminals 28-7 of the drilling machine body unit 12 and the female connector terminals 16-5 of the battery 16 are connected to each other, and the battery locking portion 16-4 provided on the battery 16 engages the battery locking recess 28-8 of the intermediate wall portion 28-1 to hold the battery 16 from moving. In this way, the battery 16 is loaded in the battery accommodating space 28. Next, the battery cover 30 is pulled out from the drilling machine body unit 12 toward the battery 16 and moved to the advanced position shown in Fig. 8. When in the advanced position, the battery cover 30 covers, from above, a vertically extending gap between the intermediate wall portion 28-1 of the battery housing 22 and the front side 16-1 of the battery 16; therefore, it is possible to prevent the entry of machining swarf, water, etc. into the gap. Accordingly, it is possible to reduce the danger of machining swarf, water, etc. entering to reach the connector terminals 16-5 and 28-7, which may cause short circuit. It should be noted that the bottom wall portion 28-2 is slightly sloped downward from the front toward the rear, and this slope allows water entering the battery accommodating space 28 to be discharged naturally. The female connector terminals 16-5 of the battery 16 face downward when the battery 16 is loaded into the battery accommodating space 28. Accordingly, if water or dust should enter through the gap between the intermediate wall portion 28-1 and the battery 16, it is difficult for the water or dust to reach the female connector terminals 16-5.

The battery cover 30 has an inclined surface 30-7 on a side thereof facing the battery 16. When the battery cover 30 is in the advanced position shown in Fig. 8, the inclined surface 30-7 abuts against the inclined cover engagement surface 16-6 (Figs. 6 and 7) formed on the top front side of the battery 16. Unloading of the battery 16 from the battery housing 22 is carried out by pushing the inclined surface 16-3 of the battery locking portion 16-4 to withdraw the battery locking portion 16-4 into the battery 16, and in this state, pulling the battery 16 upward from the battery accommodating space 28. In this regard, the arrangement is such that, when the battery cover 30 is in the advanced position, the battery 16 cannot be unloaded by being pulled upward because the battery cover 30 interferes with the battery 16. That is, when the battery cover 30 is in the advanced position, a part of the battery cover 30 lies in a travel path of the battery 16 along which the battery 16 moves when unloaded from the battery accommodating space 28 by being pulled upward therefrom; therefore, when the battery cover 30 is in the advanced position, the battery 16 cannot be unloaded from the battery housing 22. It is necessary, in order to unload the battery 16, to push and move the battery cover 30 into the drilling machine body unit 12 to the retracted position shown in Fig. 7, and in this state, to pull out the battery 16 upwardly. Thus, the battery cover 30 limits the movement of the battery 16, thereby preventing the battery 16 from being unloaded accidentally. Further, the battery cover 30, when in the advanced position, covers the inclined surface 16-3 of the battery 16 so that the inclined surface 16-3 cannot be pushed. Thus, when the battery cover 30 is in the advanced position, the battery locking portion 16-4 cannot be disengaged from the battery locking recess 28-8.

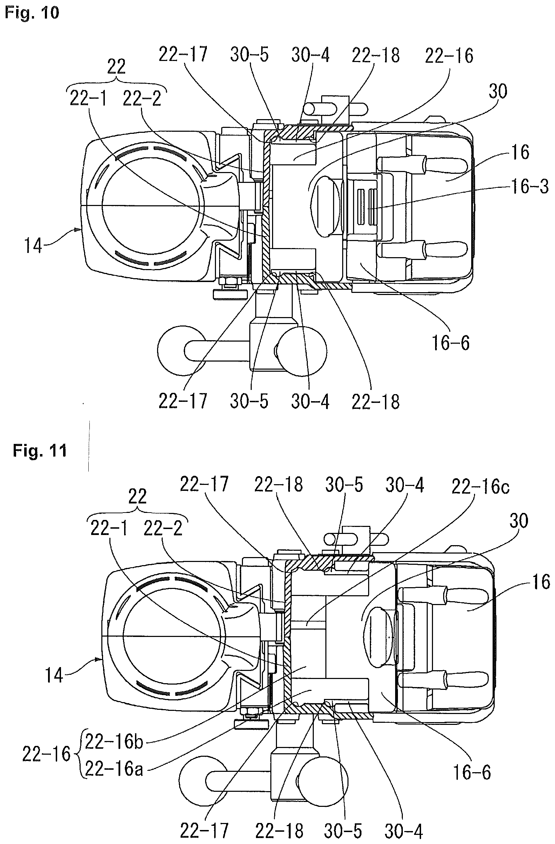

The battery cover 30 in this embodiment has, as shown in Figs. 9A and 9B, a T-shaped battery cover body part 30-3 comprising a narrow-width sliding portion 30-1 located at the front side as seen in the longitudinal direction of the drilling machine 10 (at the left side as seen in the figures) and a cover portion 30-2 contiguous with the rear end (right end as seen in the figures) of the sliding portion 30-1 and wider in width than the sliding portion 30-1. The cover portion 30-2 of the battery cover body part 30-3 has forwardly extending arm portions 30-4 formed at both ends thereof. The arm portions 30-4 have outwardly projecting convex locking portions 30-5 formed at their respective distal ends. The sliding portion 30-1 has a switch engaging projection 30-6 formed on the lower side thereof to engage a limit switch 32, which will be explained later. The battery cover 30 is formed as an integral member from an elastic material, e.g. a resin material, and configured such that the elastic deformation of the elongated arm portions 30-4 allows the locking portions 30-5 at the distal ends of the arm portions 30-4 to be displaced in the lateral direction (vertical direction as seen in the figures). When the battery cover 30 is in the retracted position, as shown in Fig. 10, the laterally displaceable locking portions engage concave first engaging portions 22-17, respectively, formed on the side surfaces of the battery cover accommodating part 22-16 to restrain accidental movement of the battery cover 30. When the battery cover 30 is pulled out toward the advanced position from the position shown in Fig. 10 with a force greater than a certain magnitude, the arm portions 30-4 are elastically deformed and hence the locking portions 30-5 are displaced inward to disengage from the first engaging portions 22-17, thereby allowing the battery cover 30 to move toward the advanced position. When the battery cover 30 has moved to the advanced position, as shown in Fig. 11, the locking portions 30-5 engage concave second engaging portions 22-18, respectively, formed on the side surfaces of the battery cover accommodating part 22-16 to restrain accidental movement of the battery cover 30. When the battery cover 30 is pushed in toward the retracted position from the position shown in Fig. 11 with a force greater than a certain magnitude, the arm portions 30-4 are elastically deformed and hence the locking portions 30-5 are displaced inward to disengage from the second engaging portions 22-18, thereby allowing the battery cover 30 to move toward the retracted position. Thus, engagement of the locking portions 30-5 of the battery cover 30 with the first or second engaging portions 22-17 or 22-18 of the battery housing 22 enables the battery cover 30 to be locked in the retracted position or the advanced position and restrained from moving. Therefore, the battery cover 30 is prevented from being moved accidentally, for example, by vibrations during drilling. Although in the battery cover 30 according to this embodiment, the locking portions 30-5 of the battery cover 30 are convex, and the first and second engaging portions 22-17 and 22-18 of the battery housing 22 are concave, it should be noted that the arrangement may be such that the locking portions 30-5 of the battery cover 30 are concave, and the first and second engaging portions 22-17 and 22-18 of the battery housing 22 are convex. Further, the arrangement may be such that the locking portions 30-5 of the battery cover 30 are configured to be non-displaceable in the lateral direction, and instead, the first and second engaging portions 22-17 and 22-18 of the battery housing 22 are configured to be laterally displaceable. This arrangement provides the same function as the above. It should, however, be noted that elastically deformable portions are more likely to be broken than other portions. Therefore, considering the possibility of breakage, it is desirable from the viewpoint of ease of repair to provide elastically deformable portions on the battery cover 30, which can be replaced easily.

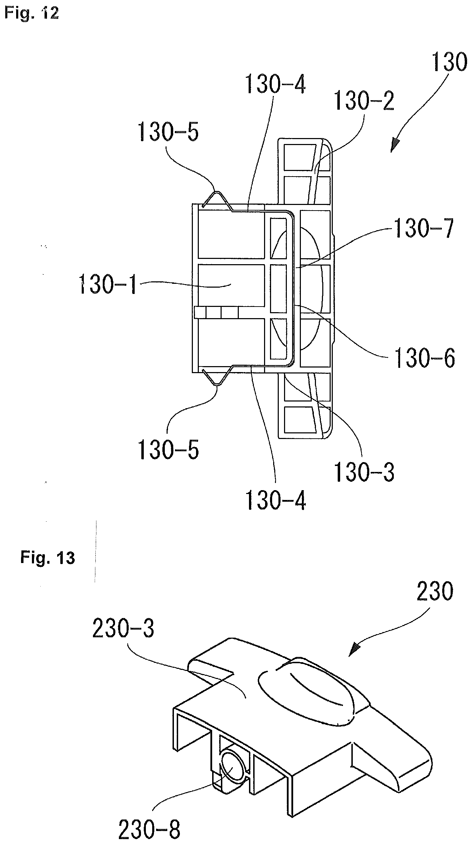

Fig. 12 shows a battery cover 130 according to another embodiment. The battery cover 130 differs from the above-described battery cover 30 shown in Figs. 9A and 9B in that arm portions 130-4 having locking portions 130-5, respectively, are connected to a connecting portion 130-6 to form in combination a battery cover locking member 130-7 having a U-shape as a whole, and that the battery cover locking member 130-7 is a separate component from a battery cover body part 130-3 comprising a sliding portion 130-1 and a cover portion 130-2. The battery cover locking member 130-7 is formed by bending a thin member such as a spring material. The battery cover locking member 130-7 is fitted into the battery cover body part 130-3 from an opening formed in the lower surface of the battery cover body part 130-3. When the battery cover locking member 130-7 is fitted in the battery cover body part 130-3, the locking portions 130-5 at the respective distal ends of the arm portions 130-4 project sideward from the sliding portion 130-1 of the battery cover body part 130-3. Engagement of the projecting locking portions 130-5 with the first and second engaging portions 22-17 and 22-18 of the battery housing 22 enables the position of the battery cover 130 to be locked in the retracted position and the advanced position, respectively, in the same way as the battery cover 30 shown in Figs. 9A and 9B. In the battery cover 130, the battery cover locking member 130-7 constituting the elastically deformable arm portions 130-4 is a separated component from the battery cover body part 130-3; therefore, only the arm portions, which are relatively easily breakable, may be formed from a metallic material of high durability or the like, so that it is possible to increase the durability of the arm portions 130-4 as compared with those of integrally formed from a resin material and hence possible to reduce the possibility of the arm portions being broken. It should be noted that the positions of the arm portions 130-4 of the battery cover 130 are laterally inward of the positions of the locking portions 30-5 of the battery cover 30 shown in Figs. 9A and 9B; therefore, the associated side walls of the battery cover accommodating part 22-16 of the battery housing 22 are located at respective positions inward of those shown in Figs. 10 and 11.

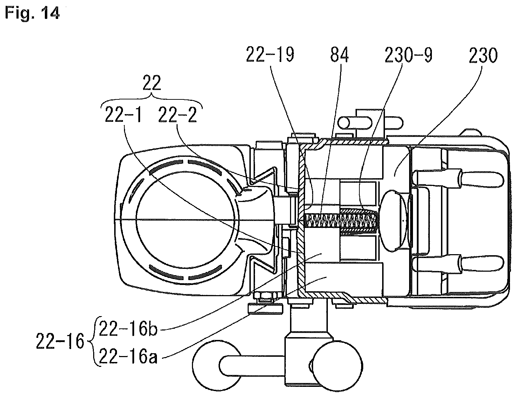

Fig. 13 shows a battery cover 230 according to still another embodiment. The battery cover 230 has a spring retaining hole 230-8 extending forward from the rear surface of a battery cover body part 230-3 and terminating halfway to the front surface of the battery cover body part 230-3. The battery cover 230 has, as shown in Fig. 14, a spring 84 installed in the spring retaining hole 230-8. The spring 84 is compressed between a terminal end surface 230-9 of the spring retaining hole 230-8 and a front wall 22-19 of the battery cover accommodating part 22-16 of the battery housing 22. In this state, the battery cover 230 is installed in the battery cover accommodating part 22-16. The compressed spring 84 urges the battery cover 230 toward the advanced position from the retracted position. The battery cover 230 has arm portions 30-4 or 130-4 having locking portions 30-5 or 130-5, which are not shown in the figures 13 and 14, as in the battery covers 30 and 130 according to the other embodiments described above, that the battery cover 230 is selectively locked in the retracted position and the advanced position.

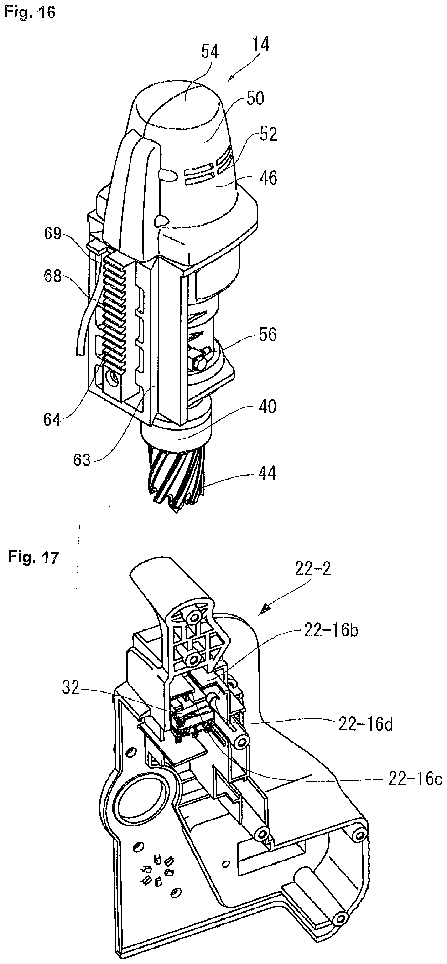

As will be clear from Fig. 3, the interior space 24, which is formed between the frame 20 and the battery housing 22, has an upper interior space 24-1 located in an upper part of the interior space 24. The upper interior space 24-1 is provided therein with a limit switch 32. The limit switch 32 is disposed to engage a downwardly projecting switch engaging projection 30-6 provided on a part of the battery cover 30 located in the battery housing 22 so that, when the battery cover 30 moves between the retracted position and the advanced position, the limit switch 32 is turned on/off by the switch engaging projection 30-6. Specifically, when the battery cover 30 projects toward the battery 16 to assume the advanced position, the switch engaging projection 30-6 pushes to turn on the limit switch 32, and, when the battery cover 30 retracts from the advanced position to move toward the retracted position, where the battery cover 30 is withdrawn into the battery housing 22, the limit switch 32 is turned off. The limit switch 32 is connected to the drive control circuit 36 disposed in a lower interior space 24-2 to function as a battery cover position detecting device detecting that the battery cover 30 has moved between the retracted position and the advanced position. With this structure, it is possible to monitor, for example, whether or not the battery 16 is correctly loaded and whether or not the battery 16 is in a removable position, and it is possible to take safety measures, e.g. disabling the motor 48 from being driven when the limit switch 32 is off, i.e. when the battery cover 30 is not in the advanced position, and decelerating or stopping the motor 48 when the limit switch 32 turns off during driving of the motor 48. It should be noted that the switch engaging projection 30-6 of the battery cover 30 extends downward through an opening 22-16c (Fig. 17) provided in a portion of the left-side part 22-2 of the battery housing 22 that constitutes the bottom portion 22-16b of the battery cover accommodating part 22-16, thus the switch engaging projection 30-6 being engageable with the limit switch 32. Further, when the battery cover 30 is in the advanced position, the switch engaging projection 30-6 abuts against a rear end surface 22-16d of the opening 22-16c to limit the travel range of the battery cover 30 and to prevent the battery cover 30 from becoming dislodged from the battery cover accommodating part 22-16. This structure is similarly provided in the battery covers 130 and 230 according to the other embodiments.

The upper interior space 24-1 located in the upper part of the interior space 24, which is formed between the battery housing 22 and the frame 20, has an LED display circuit 34 disposed therein in addition to the above-described limit switch 32. The LED display circuit 34 is connected to the drive control circuit 36 to display a status of the drilling machine 10 through an LED display 33 (Fig. 1) on the top of the battery housing 22 according to a signal from the drive control circuit 36. The LED display circuit 34 has green, yellow and red LEDs to inform the operator about the remaining capacity of the battery 16 and the level of load on the motor 48 by blink patterns of the LEDs. In addition, the LED display circuit 34 gives warning to the operator when it is judged that abnormality has occurred, for example, when the battery cover 30 retracts from the advanced position during driving of the motor 48 and, consequently, the limit switch 32 turns off. It should be noted that it is also possible to use a single LED packaged as a single device capable of emitting different colors, in place of a set of discrete LEDs respectively emitting green, yellow and red light.

The LED display circuit 34 and the limit switch 32 are each electrically connected to the drive control circuit 36 through wiring 35 covered with shrinkable tubing or the like. The battery housing 22 is provided with a partition plate 38 at a position between the drive control circuit 36, on the one hand, and, on the other, the LED display circuit 34 and the limit switch 32 to separate the lower interior space 24-2, where the drive control circuit 36 is disposed, from the upper interior space 24-1, where the LED display circuit 34 and the limit switch 32 are disposed. Specifically, as shown in Fig. 4, a right-side partition plate 38-1 provided in the right-side part 22-1 of the battery housing 22 and a left-side partition plate 38-2 provided in the left-side part 22-2 of the battery housing 22 face each other in such a manner as to form an L-shaped opening therebetween, and an L-shaped seal member 39 is attached so as to sealingly engage the opening. The seal member 39 has a wiring insertion hole 39-1 formed in the center thereof, and the wiring 35 connected to the LED display circuit 34 and the limit switch 32 is passed through the wiring insertion hole 39-1 and thus sealed. The partition plate 38 is provided so as to slope downward from the rear toward the front. In addition, a drain port 80 is provided in a part of the front wall portion 20-1 of the frame 20 that is located in the upper interior space 24-1. The upper interior space 24-1 is not sealed from the outside because the upper interior space 24-1 communicates with the battery cover accommodating part 22-16 slidably receiving the battery cover 30, which projects to the outside of the battery housing 22. Therefore, there is a possibility that water, e.g. rainwater, may enter the upper interior space 24-1 from the outside. However, the above-described structure having the sloped partition plate 38 and the drain port 80 makes it possible to discharge water entering the upper interior space 24-1 to the outside from the drain port 80 without allowing the water to enter the lower interior space 24-2, where the drive control circuit 36 is located. Consequently, it is possible to prevent the drive control circuit 36 from being wet with water, which would otherwise cause a failure. Further, the upper surface of the lower wall portion 20-2 slopes downward from the front toward the rear, so that if water should enter the lower interior space 24-2, the water is discharged to the outside from a drain groove 20-13 provided at the rear end of the lower wall portion 20-2.

As shown in Fig. 3, the drilling drive unit 14 is attached to the front side of the front wall portion 20-1 of the frame 20. The drilling drive unit 14 has a drilling tool 44, such as a drill or an annular cutter, held at the lower side of the drilling drive unit 14 by being fitted to an arbor 40. The arbor 40 is connected through a speed reducer 45 in the drilling drive unit 14 to a motor 48 provided in a motor cover 46 of the drilling drive unit 1.4. The drilling tool 44 is driven to rotate by driving the motor 48. As shown in Fig. 1 and other figures, the motor cover 46 has a plurality of vent holes 52 provided in side surfaces 50 thereof to cool the motor 48 by air flowing into the motor cover 46 through the vent holes 52. The reason why the vent holes 52 are provided not in a top surface 54 but in the side surfaces 50 is to prevent, as much as possible, water or foreign objects, such as machining swarf and dust, from entering the inside of the motor cover 46. The left side of the drilling drive unit 14 is provided with a plug 56 serving as a cutting fluid filler port. A one-touch socket with hose is attached to the plug 56 to supply a cutting fluid to the drilling tool 44 during drilling.

As shown in Fig. 15, the front side of the front wall portion 20-1 of the frame 20 has vertically extending dovetail grooves 62 formed on the right and left sides thereof. The drilling drive unit 14 is, as shown in Fig. 16, provided with a slider 63 having right- and left-side edges shaped to correspond to the dovetail grooves 62. The slider 63 is provided with a rack 64 (Fig. 16), and the frame 20 is provided with a pinion 65 (Fig. 15) to be engaged with the rack 64. The pinion 65 is rotated by manually rotating a feed handle 66 removably attached to an end of the shaft 23-1 projecting from the right side 20-10 (Fig. 2) of the frame 20, thereby vertically moving the drilling drive unit 14 relative to the frame 20. It should be noted that the feed handle 66 can also be attached to an end of the shaft 23-1 projecting from the left side 20-11 of the frame 20. Thus, the feed handle 66 can be attached to either of the right and left sides of the frame 20 according to each particular situation.

Wiring 68 extending from the motor 48 of the drilling drive unit 14 passes through a wiring insertion passage 69 (Figs. 15 and 16) formed between one dovetail groove 62 and the slider 63 and, as shown in Fig. 3, leads into the interior space 24 of the drilling machine body unit 12, in which the wiring 68 is connected to the drive control circuit 36. Thus, almost no part of the wiring 68 is exposed to the outside. In this way, the wiring 68 is prevented from being disconnected, for example, by application of an excessively large force thereto which might otherwise occur when the wiring 68 is caught on something.

The electromagnet-type securing unit 18 attached to the lower side of the drilling machine body unit 12 is configured such that, when electric power is supplied to the electromagnet 18-1 therein, the electromagnet-type securing unit 18 generates a magnetic field and thus magnetically adheres to a magnetic material, e.g. iron, thereby securely holding the drilling machine 10. A position adjusting mechanism 58 is provided between the electromagnet-type securing unit 18 and the frame 20 to allow the position of the drilling machine body unit 12 to be adjusted both longitudinally and laterally relative to the electromagnet-type securing unit 18 by turning a position adjusting handle 60 removably attached to the position adjusting mechanism 58, thereby enabling the drilling position of the workpiece to be finely adjusted. It should be noted that the position adjusting handle 60 can also be attached to the right side of the position adjusting mechanism 58.

As shown in Fig. 1, the left side 22-15 of the battery housing 22 is provided with an electromagnet switch 70 for activating the electromagnet-type securing unit 18. A wall 72 is provided around the electromagnet switch 70 to prevent the electromagnet switch 70 from being actuated carelessly. The electromagnet switch 70 is configured to be turned off by pressing the rear (left as seen in Fig. 1) end portion thereof. The wall 72 is raised in height at its rear end portion so that the electromagnet switch 70 is not easily accidentally switched, particularly from on to off. Further, as shown in Fig. 2, the right side 22-14 of the battery housing 22 is provided with a motor switch 74 for starting the motor 48. A wall 76 is also provided around the motor switch 74 to prevent the motor switch 74 from being actuated carelessly. Thus, the electromagnet switch 70 and the motor switch 74 are disposed on the different lateral sides 22-15 and 22-14, respectively, of the battery housing 22. With this structure, it is easy to ensure the areas for placing the switches. In addition, because interference between wiring lines in the interior space 24 is reduced, it is possible to design the battery housing 22 to be smaller in size. Further, it is possible to prevent the electromagnet switch 70 and the motor switch 74 from being actuated mistakenly from each other.

Although the battery cover 30 is configured to abut against the battery 16 when the battery cover 30 is in the advanced position, the battery cover 30 need not abut against the battery 16 but may be positioned close to the battery 16. Further, the battery cover 30 need not always have a function of holding the battery 16 so that the battery 16 will not become dislodged. The battery cover 30 may be configured to move to the retracted position by being pushed by the battery 16 when the battery 16 is moved upward from the battery accommodating space 28. Although in this embodiment the limit switch 32 is employed as a battery cover position detecting device, a sensor of any other form, e.g. an optical switch, may be employed to realize a battery cover position detecting device.

### List of Reference Signs:

drilling machine 10; drilling machine body unit 12; drilling drive unit 14; battery 16; front side 16-1; guide rails 16-2; inclined surface 16-3; battery locking portion 16-4; female connector terminals 16-5; cover engagement surface 16-6; opening 16-6a; electromagnet-type securing unit 18; electromagnet 18-1; frame 20; front wall portion 20-1; lower wall portion 20-2; right-side rib 20-3; left-side rib 20-4; handle mounting hole 20-8; engagement recess 20-9; right side 20-10; left side 20-11; drain groove 20-13; threaded holes 21; battery housing 22; right-side part 22-1; left-side part 22-2; engagement projecting portion 22-9; screw insertion holes 22-11; screw insertion holes 22-12; threaded holes 22-13; right side 22-14; left side 22-15; battery cover accommodating part 22-16; top portion 22-16a; bottom portion 22-16b; opening 22-16c; rear end surface 22-16d; first engaging portions 22-17; second engaging portions 22-18; front wall 22-19; gear mechanism part 23; shaft 23-1; interior space 24; upper interior space 24-1; lower interior space 24-2; grip 26; right-side grip portion 26-1; left-side grip portion 26-2; screw 27; battery loading part, battery accommodating space 28; intermediate wall portion 28-1; bottom wall portion 28-2; right-side wall portion 28-3; left-side wall portion 28-4; battery guides 28-5; guide grooves 28-6; male connector terminals 28-7; battery locking recess 28-8; upper wall portion 28-9; battery cover 30; sliding portion 30-1; cover portion 30-2; battery cover body part 30-3; arm portions 30-4; locking portions 30-5; switch engaging projection 30-6; inclined surface 30-7; limit switch 32; LED display 33; LED display circuit 34; wiring 35; drive control circuit 36; partition plate 38; right-side partition plate 38-1; left-side partition plate 38-2; seal member 39; wiring insertion hole 39-1; arbor 40; drilling tool 44; speed reducer 45; motor cover 46; motor 48; side surfaces 50; vent holes 52; top surface 54; plug 56; position adjusting mechanism 58; position adjusting handle 60; dovetail grooves 62; slider 63; rack 64; pinion 65; feed handle 66; wiring 68; wiring insertion passage 69; electromagnet switch 70; wall 72; motor switch 74; wall 76; drain port 80; screws 82; spring 84; battery cover 130; sliding portion 130-1; cover portion 130-2; battery cover body part 130-3; arm portions 130-4; locking portions 130-5; connecting portion 130-6; battery cover locking member 130-7; battery cover 230; battery cover body part 230-3; spring retaining hole 230-8; terminal end surface 230-9

## Claims

1. A drilling machine (10) comprising:
a drilling drive unit (14) having a motor (40) for rotationally driving a drilling tool (44);
a drilling machine body unit (12) having a battery loading part (28) into which a battery (16) for supplying electric power to the motor (40) is loaded, the drilling machine body unit (12) supporting the drilling drive unit (14) vertically movably to bring the drilling tool (44) toward and away from a workpiece; and
a battery cover (30; 130; 230) attached to the drilling machine body unit, the battery cover (30; 130; 230) being attached so as to be slideable between a retracted position and an advanced position relative to the battery (16) loaded in the battery loading part (28), the battery cover (30; 130; 230) being configured to cover at least a part of a gap between the drilling machine body unit (12) and the battery (16) when the battery cover (30; 130; 230) is in the advanced position,
wherein the battery cover (30; 130; 230) has a locking portion (30-5; 130-5);
the drilling machine body unit (12) having a first engaging portion (22-17) which, when the battery cover (30; 130; 230) is in the retracted position, engages the locking portion (30-5; 130-5) to restrain movement of the battery cover (30; 130; 230) in a sliding direction, the drilling machine body unit (12) further having a second engaging portion (22-18) which, when the battery cover (30; 130; 230) is in the advanced position, engages the locking portion (30-5; 130-5) to restrain movement of the battery cover (30; 130; 230) in the sliding direction.

2. The drilling machine (10) of claim 1, wherein the battery cover (30; 130; 230) is configured such that, when the battery cover (30; 130; 230) is in the advanced position, at least a part of the battery cover (30; 130; 230) is located in a travel path of the battery (16) along which the battery (16) moves when the battery (16) loaded in the battery loading part (28) is unloaded therefrom, so that, when the battery cover (30; 130; 230) is in the advanced position, the battery (16) cannot be unloaded from the battery loading part (28).

3. The drilling machine (10) of claim 2, wherein the drilling machine body unit (12) is structured such that the battery (16) can be unloaded from the battery loading part (28) by moving the battery (16) upward from the battery loading part (28);
the battery cover (30; 130; 230) being configured to cover the gap between the drilling machine body unit (12) and the battery (16) from above when the battery cover (30; 130; 230) is in the advanced position.

4. The drilling machine (10) of claim 3, wherein the battery loading part (28) has a battery guide (28-5) extending in a vertical direction to guide the battery (16) in the vertical direction, so that the battery (16) is loaded into the battery loading part (28) by moving the battery (16) downward along the battery guide (28-5) and unloaded from the battery loading part (28) by moving the battery (16) upward along the battery guide (28-5).

5. The drilling machine (10) of any one of the preceding claims, wherein the battery cover (30; 130; 230) has an elastically deformable arm portion (30-4; 130-4) extending in the sliding direction;
the locking portion (30-5; 130-5) being provided at a distal end of the arm portion (30-4; 130-4).

6. The drilling machine (10) of any one of the preceding claims, further comprising:
a battery cover position detecting device disposed in the drilling machine body unit (12) to detect that the battery cover (30; 130; 230) has moved between the retracted position and the advanced position.

7. The drilling machine (10) of claim 6, wherein the battery cover position detecting device has a limit switch (32);
the battery cover (30; 130; 230) being configured to turn on/off the limit switch (32) when the battery cover (30; 130; 230) moves between the retracted position and the advanced position.

8. The drilling machine (10) of any one of the preceding claims, further comprising:
a spring (84) disposed between the drilling machine body unit (12) and the battery cover (230), the spring (84) urging the battery cover (230) toward the advanced position from the retracted position.

## Patentansprüche

1. Eine Bohrmaschine (10), die Folgendes aufweist:
eine Bohrantriebseinheit (14) mit einem Motor (40) zum Drehantrieb eines Bohrwerkzeuges (44);
eine Bohrmaschinen-Körpereinheit (12) mit einem Batterieladeabschnitt (28), in welche eine Batterie (16) zum Liefern elektrischer Energie an den Motor (40) geladen ist, wobei die Bohrmaschinen-Körpereinheit (12) die Bohrantriebseinheit (14) vertikal bewegbar trägt, um das Bohrwerkzeug (44) zu und weg von einem Werkstück zu bringen; und
eine Batterieabdeckung (30; 130; 230), die an der Bohrmaschinen-Körpereinheit (12) angebracht ist, wobei die Batterieabdeckung (30; 130; 230) so angebracht ist, dass sie zwischen einer zurückgezogenen Position und einer vorgeschobenen Position verschiebbar bezüglich der in dem Batterieladeabschnitt (28) geladenen Batterie (16) ist, wobei die Batterieabdeckung (30; 130; 230) konfiguriert ist, um mindestens einen Teil eines Spaltes zwischen der Bohrmaschinen-Körpereinheit (12) und der Batterie (16) abzudecken, wenn die Batterieabdeckung (30; 130; 230) in der vorgeschobenen Position ist, wobei die Batterieabdeckung (30; 130; 230) ein Verriegelungsteil (30-5; 130-5) besitzt;
wobei die Bohrmaschinen-Körpereinheit (12) ein erstes Eingriffsteil (22-17) besitzt, welches, wenn die Batterieabdeckung (30; 130; 230) in der zurückgezogenen Position ist, mit dem Verriegelungsteil (30-5; 130-5) in Eingriff steht, um eine Bewegung der Batterieabdeckung (30; 130; 230) in einer Gleiterrichtung zu unterdrücken, wobei die Bohrmaschinen-Körpereinheit (12) ferner ein zweites Eingriffsteil (22-18) besitzt, welches, wenn die Batterieabdeckung (30; 130; 230) in der vorgeschobenen Position ist, mit dem Verriegelungsteil (30-5; 130-5) in Eingriff steht, um eine Bewegung der Batterieabdeckung (30; 130; 230) in der Gleitrichtung zu unterdrücken.

2. Bohrmaschine (10) nach Anspruch 1, wobei die Batterieabdeckung (30; 130; 230) so konfiguriert ist, dass, wenn die Batterieabdeckung (30; 130; 230) in der vorgeschobenen Position ist, mindestens ein Teil der Batterieabdeckung (30; 130; 230) in einem Bewegungspfad der Batterie (16) angeordnet ist, entlang welcher sich die Batterie (16) bewegt, wenn die in dem Batterieladeabschnitt (28) geladene Batterie (16) davon entladen wird, so dass, wenn die Batterieabdeckung (30; 130; 230) in der vorgeschobenen Position ist, die Batterie (16) von dem Batterieladeabschnitt (28) nicht entladen werden kann.

3. Bohrmaschine (10) nach Anspruch 2, wobei die Bohrmaschinen-Körpereinheit (12) so strukturiert ist, dass die Batterie (16) von dem Batterieladeabschnitt (28) entladen werden kann durch Bewegen der Batterie (16) aufwärts von dem Batterieladeabschnitt (28);
wobei die Batterieabdeckung (30; 130; 230) konfiguriert ist, um den Spalt zwischen der Bohrmaschinen-Körpereinheit (12) und der Batterie (16) von oben abzudecken, wenn die Batterieabdeckung (30; 130; 230) in der vorgeschobenen Position ist.

4. Bohrmaschine (10) nach Anspruch 3, wobei der Batterieladeabschnitt (28) eine Batterieführung (28-5) besitzt, die sich in einer Vertikalrichtung erstreckt, um die Batterie (16) in die Vertikalrichtung zu führen, so dass die Batterie (16) in den Batterieladeabschnitt (28) geladen wird durch Bewegen der Batterie (16) abwärts entlang der Batterieführung (28-5), und von dem Batterieladeabschnitt (28) entladen wird durch Bewegen der Batterie (16) aufwärts entlang der Batterieführung (28-5).

5. Bohrmaschine (10) nach einem der vorhergehenden Ansprüche, wobei die Batterieabdeckung (30; 130; 230) einen elastisch verformbaren Armteil (30-4; 130-4) besitzt, der sich in der Gleitrichtung erstreckt;
wobei der Verriegelungsteil (30-5; 130-5) an einem Distalende des Armteils (30-4; 130-4) vorgesehen ist.

6. Bohrmaschine (10) nach einem der vorhergehenden Ansprüche, die ferner Folgendes aufweist:
eine Batterieabdeckungspositions-Detektiervorrichtung, die in der Bohrmaschinen-Körpereinheit (12) angeordnet ist, um zu detektieren, dass sich die Batterieabdeckung (30; 130; 230) zwischen der zurückgezogenen Position und der vorgeschobenen Position bewegt hat.

7. Bohrmaschine (10) nach Anspruch 6, wobei die Batterieabdeckungspositions-Detektiervorrichtung einen Endschalter (32) besitzt;
wobei die Batterieabdeckung (30; 130; 230) konfiguriert ist, um den Endschalter (32) an-/abzuschalten, wenn die Batterieabdeckung (30; 130; 230) sich zwischen der zurückgezogenen Position und der vorgeschobenen Position bewegt.

8. Bohrmaschine (10) nach einem der vorhergehenden Ansprüche, die ferner Folgendes aufweist:
eine Feder (84), die zwischen der Bohrmaschinen-Körpereinheit (12) und der Batterieabdeckung (230) angeordnet ist, wobei die Feder (84) die Batterieabdeckung (230) von der zurückgezogenen Position zu der vorgeschobenen Position drängt.

## Revendications

1. Machine de perçage (10) comprenant :
un module d'entraînement de perçage (14) comportant un moteur (40) pour entraîner en rotation un outil de perçage (44) ;
un module formant corps de machine de perçage (12) comportant une partie de chargement de batterie (28) dans laquelle une batterie (16) destinée à fournir de l'énergie électrique au moteur (40) est chargée, le module formant corps de machine de perçage (12) supportant le module d'entraînement de perçage (14) verticalement de manière mobile pour approcher et éloigner l'outil de perçage (44) d'une pièce à travailler ; et
un couvercle de batterie (30 ; 130 ; 230) fixé au module formant corps de machine de perçage, le couvercle de batterie (30 ; 130 ; 230) étant fixé de manière à pouvoir coulisser entre une position rétractée et une position avancée par rapport à la batterie (16) chargée dans la partie de chargement de batterie (28), le couvercle de batterie (30 ; 130 ; 230) étant agencé pour couvrir au moins une partie d'un intervalle entre le module formant corps de machine de perçage (12) et la batterie (16) lorsque le couvercle de batterie (30 ; 130 ; 230) est dans la position avancée,
dans lequel le couvercle de batterie (30 ; 130 ; 230) comporte une portion de verrouillage (30-5 ; 130-5) ;
le module de corps de machine de perçage (12) comportant une première portion d'engagement (22-17) qui, lorsque le couvercle de batterie (30 ; 130 ; 230) est dans la position rétractée, se met en prise avec la portion de verrouillage (30-5 ; 130-5) pour restreindre le mouvement du couvercle de batterie (30 ; 130 ; 230) dans une direction de coulissement, le module formant corps de machine de perçage (12) comportant en outre une deuxième portion de d'engagement (22-18) qui, lorsque le couvercle de batterie (30 ; 130 ; 230) est dans la position avancée, se met en prise avec la portion de verrouillage (30-5 ; 130-5) pour restreindre le mouvement du couvercle de batterie (30 ; 130 ; 230) dans la direction de coulissement.

2. Machine de perçage (10) selon la revendication 1, dans laquelle le couvercle de batterie (30 ; 130 ; 230) est agencé de telle sorte que, lorsque le couvercle de batterie (30 ; 130 ; 230) est dans la position avancée, au moins une partie du couvercle de batterie (30 ; 130 ; 230) est située dans un chemin de déplacement de la batterie (16) le long duquel la batterie (16) se déplace lorsque la batterie (16) chargée dans la partie de chargement de batterie (28) est déchargée à partir de celui-ci, de sorte que, lorsque le couvercle de batterie (30 ; 130 ; 230) est dans la position avancée, la batterie (16) ne peut pas être déchargée de la partie de chargement de batterie (28).

3. Machine de perçage (10) selon la revendication 2, dans laquelle le module formant corps de machine de perçage (12) est agencé de telle sorte que la batterie (16) peut être déchargée de la partie de chargement de batterie (28) en déplaçant la batterie (16) vers le haut à partir de la partie de chargement de batterie (28) ;
le couvercle de batterie (30 ; 130 ; 230) étant agencé pour couvrir l'intervalle entre le module formant corps de machine de perçage (12) et la batterie (16) à partir du dessus lorsque le couvercle de batterie (30 ; 130 ; 230) est dans la position avancée.

4. Machine de perçage (10) selon la revendication 3, dans laquelle la partie de chargement de batterie (28) comporte un guide de batterie (28-5) s'étendant dans la direction verticale pour guider la batterie (16) dans la direction verticale, de sorte que la batterie (16) est chargée dans la partie de chargement de batterie (28) en déplaçant la batterie (16) vers le bas le long du guide de batterie (28-5) et déchargée de la partie de chargement batterie (28) en déplaçant la batterie (16) vers le haut le long du guide de batterie (28-5) .

5. Machine de perçage (10) selon l'une quelconque des revendications précédentes, dans laquelle le couvercle de batterie (30 ; 130 ; 230) comporte une portion de bras élastiquement déformable (30-4 ; 130-4) s'étendant dans la direction de coulissement ;
la portion de verrouillage (30-5 ; 130-5) étant prévue à une extrémité distale de la portion de bras (30-4 ; 130-4).

6. Machine de perçage (10) selon l'une quelconque des revendications précédentes, comprenant en outre :
un dispositif de détection de position de couvercle de batterie disposé dans le module formant corps de machine de perçage (12) pour détecter que le couvercle de batterie (30 ; 130 ; 230) s'est déplacé entre la position rétractée et la position avancée.

7. Machine de perçage (10) selon la revendication 6, dans laquelle le dispositif de détection de position de couvercle de batterie comporte un commutateur de fin de course (32) ;
le couvercle de batterie (30 ; 130 ; 230) étant agencé pour commuter en marche/à l'arrêt le commutateur de fin de course (32) lorsque le couvercle de batterie (30 ; 130 ; 230) se déplace entre la position rétractée et la position avancée.

8. Machine de perçage (10) selon l'une quelconque des revendications précédentes, comprenant en outre :
un ressort (84) disposé entre le module formant corps de machine de perçage (12) et le couvercle de batterie (230), le ressort (84) sollicitant le couvercle de batterie (230) en direction de la position avancée à partir de la position rétractée.
